# EUROPÄISCHE PATENTSCHRIFT

(11) **EP 3 436 322 B1**
(45) Veröffentlichungstag und Bekanntmachung des Hinweises auf die Patenterteilung: **22.06.2022**
(21) Anmeldenummer: 17713935.9
(22) Anmeldetag: 27.03.2017
(51) Int. Cl.: B60T 17/04, B60D 1/64

(54) **KUPPLUNGSKOPF**
COUPLING HEAD
TÊTE D'ACCOUPLEMENT

(30) Priorität: 30.03.2016 DE 102016003656
(43) Veröffentlichungstag der Anmeldung: 06.02.2019
(73) Patentinhaber: KNORR-BREMSE Systeme für Nutzfahrzeuge GmbH, 80809 München (DE)
(72) Erfinder: SONAR, Sachin, Pimpri Pune 411018 (IN); KHAIRNAR, Pankaj, Pune 411033 (IN); SHAHAPURE, Mahesh, Chinchwad Pune 411019 (IN)
(86) Internationale Anmeldenummer: PCT/EP2017/057226
(87) Internationale Veröffentlichungsnummer: WO 2017/167702

(56) Entgegenhaltungen:
- WO-A1-2015/123508
- DE-A1-102009 036 619
- DE-A1-102011 002 129
- GB-A- 2 446 948

## Beschreibung

Die vorliegende Erfindung betrifft einen Kupplungskopf für ein Kupplungssystem, insbesondere für ein Kupplungssystem zur pneumatischen Verbindung einer pneumatischen Bremsanlage eines Zugfahrzeugs und eines Anhängers.

Ein derartiges Zugfahrzeug kann beispielsweise ein Nutzfahrzeug wie ein Lastkraftwagen mit einer pneumatischen Bremsanlage sein.

Aus dem Stand der Technik sind bereits Kupplungssysteme mit Kupplungsköpfen zur pneumatischen Verbindung der Bremsanlage eines Zugfahrzeugs und eines Anhängers bekannt. Diese Systeme weisen eine Filtereinheit zur Filterung der den Kupplungskopf durchströmenden Druckluft auf.

Ein derartiger Kupplungskopf ist beispielsweise aus der DE 199 31 162 A1 oder der DE 28 33 834 A1 bekannt.

Aus der DE 10 2009 036 619 A1 ist beispielsweise ein Kupplungskopf zur pneumatischen Verbindung der Bremsanlage eines Zugfahrzeugs und eines Anhängers bekannt, bei dem eine Ventileinrichtung vorgesehen ist, welche bei einem vorgegebenen Maß von Verunreinigung der Filtereinheit diese mittels Bypassverbindungen derart schaltet, dass die durch den Kupplungskopf strömende Druckluft nicht mehr durch den Filter der Filtereinheit, sondern durch die Bypassverbindungen strömt.

Aus der DE 10 2011 002 129 A1 ist ein Kupplungskopf mit einem permanent offenen, das Filterelement umgehenden Bypass bekannt. Diese Lösung erfordert allerdings bauartbedingt eine Umlenkung des Druckluftstroms, insbesondere beim Bypassbetrieb im Vorwärtsfluss. Wünschenswert wäre allerdings eine einfachere Strömungsführung.

Aus der GB2446948A ist eine pneumatische Bremsleitungskupplung für ein Fahrzeug bekannt, wobei ein Filter zwischen der Einlassöffnung und Auslassöffnung vorgesehen ist. Dabei wechselt die Kupplung zwischen einer Filterkonfiguration, bei der der Hauptluftstrom durch das Filtrationsmedium fließt, und einer Bypasskonfiguration, bei der der Bypassluftstrom die Einlassflöche des Filtrationsmediums umgeht, sobald der durch das Federelement eingestellte Einlassdruck einen Schwellenwert überschreitet.

Aus der WO2015/123508 A1 ist eine Luftbremsfilteranordnung bekannt, welche eine Filteranordnungsbasis, einen Filter und einen Indikator umfasst, der mit der Basis der Filteranordnung gekoppelt ist und von einer ersten Position, die einen normalen Filterzustand anzeigt, in eine zweite Position bewegt werden kann, die einen verstopften Filter anzeigt und wobei die Luft einen verstopften Filter durch einen Bypasspfad umgehen kann.

Es ist daher die Aufgabe der vorliegenden Erfindung, einen Kupplungskopf der eingangs genannten Art in vorteilhafter Weise weiterzubilden, insbesondere dahingehend, dass eine verbesserte Strömungsführung und Notfunktion des Kupplungskopfs bei Vorwärtsfluss und ggf. auch bei Rückwärtsfluss möglich ist.

Diese Aufgabe wird erfindungsgemäß gelöst durch einen Kupplungskopf mit den Merkmalen des Anspruchs 1. Danach ist vorgesehen, dass ein Kupplungskopf für ein Kupplungssystem ein Kupplungskopfgehäuse, einen Filtereinsatz und ein Dichtelement aufweist, wobei das Kupplungsgehäuse wenigstens einen ersten Koppelungsanschluss und wenigstens einen zweiten Koppelungsanschluss aufweist, wobei der erste Koppelungsanschluss eine Filtereinsatzausnehmung ausbildet, in die der Filtereinsatz eingesetzt ist und wobei das Dichtelement im Normalbetriebszustand dichtend am Filtereinsatz anliegt und im Bypassbetriebszustand einen Bypass zwischen Dichtelement und Filtereinsatz freigibt, wobei der Filtereinsatz Rückflussbypassöffnungen aufweist sowie ein im Inneren des Filtereinsatzes angeordnetes Diaphragma, das die Rückflussbypassöffnungen im Normalbetriebszustand dichtend verschließt und in einem Rückflussbypasszustand die Rückflussbypassöffnungen freigibt.

Die Erfindung basiert auf dem Grundgedanken, dass im Bypassbetriebszustand, d.h. in einem Zustand, in dem beim Vorwärtsfluss (Einströmung durch den ersten Koppelungsanschluss und nachfolgend durch die Filtereinheit) ein vorgegebenes Maß von Verunreinigung der Filtereinheit überschritten ist, die zugeführte Druckluft am Filtereinsatz vorbeiströmt. Die Druckluft soll vielmehr im Bypassbetrieb zwischen Dichtelement und der Außenseite des Filtereinsatzes entlangströmen. Dadurch ergibt sich der Vorteil, dass die Druckluft erst gar nicht in den Filtereinsatz einströmen und von dort dann umgelenkt werden muss. Vielmehr reicht es aus, wenn die Luft direkt am Filtereinsatz vorbei durch eine Bypassöffnung zwischen Dichtelement und Filtereinsatz, die ringartig ausgebildet sein kann, hindurchströmen kann. Eine Umlenkung des Druckluftstroms ist somit nicht mehr erforderlich. Eine derartige Ausgestaltung ermöglicht auch eine Reduktion der Abmessungen des Kupplungskopfes und insbesondere der Abmessungen des Kupplungskopfgehäuses. Das Dichtelement kann ein einfaches Design aufweisen und beispielsweise in einer Ringnut im Kupplungskopfgehäuse gehalten sein.

Ferner ermöglichen die Rückflussbypassöffnungen im Filtereinsatz sowie das im Inneren angeordnete Diaphragma auch für einen Rückflussbetrieb, d.h. in einem Betriebsfall, in dem Luft vom Inneren des Kupplungskopfs nach außen durch den Filtereinsatz in Richtung des ersten Koppelungsanschlusses strömt, eine Notfunktion über einen Rückflussbypass bereitzustellen. Dieser Rückflussstrom kann die Steuerluft sein, welche in die Anhängerbremsanlage fließt. Diese Steuerluft kann über den Kupplungskopf zurückgeführt werden und wird dann z.B. am Anhängersteuerventil des Zugfahrzeugs abgeblasen.

Insbesondere kann es sich bei dem Kupplungskopf um einen Kupplungskopf für ein Kupplungssystem zur pneumatischen Verbindung einer pneumatischen Bremsanlage eines Zugfahrzeugs und eines Anhängers handeln.

Des Weiteren kann vorgesehen sein, dass das Dichtelement eine radial umlaufende Dichtlippe aufweist. Dadurch kann eine gleichmäßige Anlage des Dichtelements mit seiner Dichtlippe an dem Filtereinsatz ermöglicht werden. Dies führt auch zu einer sicheren Abdichtung des Bypasses im Normalbetriebszustand.

Ferner ist möglich, dass die Dichtlippe im montierten Zustand gegen die Außenseite des Filtereinsatzes angestellt ist. Dadurch wird im Normalbetriebszustand eine sichere Abdichtung des Bypasses erreichet, so dass dieser nicht permanent geöffnet ist.

Außerdem kann vorgesehen sein, dass die Dichtlippe in Richtung Gehäuseinneres des Kupplungskopfgehäuses orientiert ist. Dadurch wird eine sichere und zuverlässige Abdichtung des Bypasses sowohl für den Normalbetriebszustand als auch für weitere Betriebszustände wie den Rückwärtsflussbetrieb erreicht.

Des Weiteren kann vorgesehen sein, dass der Filtereinsatz gesondert im Kupplungskopfgehäuse befestigt ist. Dadurch wird eine Befestigung unabhängig vom Dichtelement ermöglicht.

Darüber hinaus ist denkbar, dass der Filtereinsatz mittels eines Befestigungsmittels befestigt ist. Dadurch wird eine einfache und zuverlässige Befestigung des Filtereinsatzes im Gehäuse ermöglicht.

Das Befestigungsmittel kann beispielsweise eine Schraube sein. Die Verwendung von Schrauben ist kostengünstig, weil es sich um Normteile handelt. Denkbar ist beispielsweise der Einsatz von gewindefurchenden Schrauben, da diese sich ihr Gewinde selbst ins Kupplungskopfgehäuse bei der Montage der Schraube hineinschneiden.

Des Weiteren kann vorgesehen sein, dass im montierten Zustand das Befestigungsmittel an dem der Öffnung des ersten Koppelungsanschlusses entgegengesetzten Ende des Filtereinsatzes angeordnet ist. Dies ermöglicht eine stabile Fixierung und auch eine einfache Montage, weil die Anbringung des Befestigungsmittels durch den Filtereinsatz hindurch möglich ist. Der Filtereinsatz kann in seinem Filtereinsatzgrund bzw. Filtereinsatzboden befestigt werden.

Außerdem kann vorgesehen sein, dass das Befestigungsmittel im montierten Zustand koaxial zur Längsachse der Filtereinsatzausnehmung angeordnet ist. Dadurch wird eine zentrische Befestigung des Filtereinsatzes ermöglicht, was eine günstige Befestigung bei gleichmäßiger Belastung des Filtereinsatzes im Kupplungskopfgehäuse ermöglicht.

Ferner kann vorgesehen sein, dass im montierten Zustand das Befestigungsmittel das Diaphragma im Filtereinsatz befestigt. Dadurch wird mittels eines einzigen Befestigungsmittels sowohl der Filtereinsatz als auch das Diaphragma befestigt, was die Bauteilanzahl reduziert und die Montage erleichtert. Grundsätzlich sind auch andere Befestigungsmöglichkeiten denkbar.

Weitere Einzelheiten und Vorteile der Erfindung sollen nun anhand eines in den Zeichnungen dargestellten Ausführungsbeispiels näher erläutert werden.

Es zeigen :
- Fig. 1: eine perspektivische Ansicht von oben auf ein Ausführungsbeispiel eines erfindungsgemäßen Kupplungskopfs;
- Fig. 2: eine perspektivische Ansicht von unten auf den Kupplungskopf gem. Fig. 1;
- Fig. 3: eine Schnittzeichnung (entlang der Längsachse) des Kupplungskopfs gem. Fig. 1;
- Fig. 4: eine schematische Darstellung des Vorwärtsflussbetriebes des Kupplungskopfs gem. Fig. 1; und
- Fig. 5: eine schematische Darstellung des Rückwärtsflussbetriebes des Kupplungskopfs gem. Fig. 1.

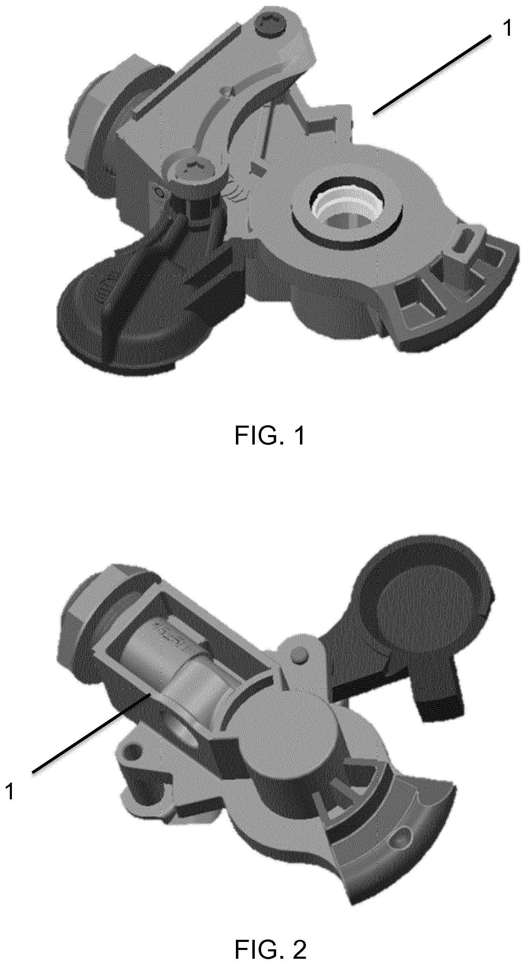

Fig. 1 zeigt eine perspektivische Ansicht von oben auf ein Ausführungsbeispiel eines erfindungsgemäßen Kupplungskopfs 1 eines Kupplungssystems K zur pneumatischen Verbindung einer pneumatischen Bremsanlage eines Zugfahrzeugs wie eines Lastwagens und eines Anhängers (Trailers).

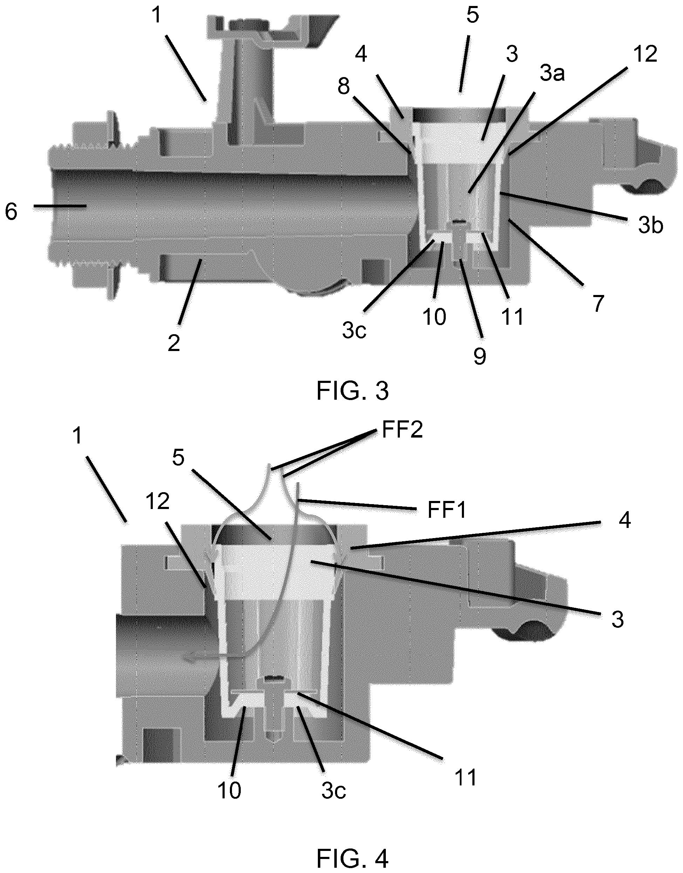

Fig. 2 zeigt eine perspektivische Ansicht von unten auf den Kupplungskopf 1 gem. Fig. 1 und Fig. 3 eine Schnittzeichnung (entlang der Längsachse) des Kupplungskopfs 1 gem. Fig. 1.

Der Kupplungskopf 1 weist ein Kupplungskopfgehäuse 2, einen Filtereinsatz 3 und ein Dichtelement 4 auf.

Im gezeigten Ausführungsbeispiel ist der Kupplungskopf 1 am Anhänger montiert.

Das Kupplungskopfgehäuse 2 weist einen ersten Koppelungsanschluss 5 und einen zweiten Koppelungsanschluss 6 auf.

Der erste Koppelungsanschluss 5 bildet eine Filtereinsatzausnehmung 7 aus.

In die Filtereinsatzausnehmung 7 ist der Filtereinsatz 3 eingesetzt.

Das Dichtelement 4 ist im Kupplungskopfgehäuse 2 in einer Ringnut gehalten.

Im Normalbetriebszustand, wie in Fig. 3 gezeigt, liegt das Dichtelement 4 dichtend am Filtereinsatz 3 an.

Das Dichtelement 4 dient jedoch nicht zur Befestigung des Filtereinsatzes 3.

Weiter weist das Dichtelement 4 eine radial umlaufende Dichtlippe 8 auf, die in Richtung Gehäuseinneres des Kupplungskopfgehäuses 2 orientiert ist.

Die Dichtlippe 8 ist, wie in Fig. 3 dargestellt, im montierten Zustand und Normalbetriebszustand gegen die Außenseite des Filtereinsatzes 3 angestellt.

Der Filtereinsatz 3 ist gesondert im Kupplungskopfgehäuse 2 befestigt und zwar mittels eines hier als Schraube 9 ausgeführten Befestigungsmittels.

Die Schraube 9 ist dabei eine gewindefurchende Schraube.

Des Weiteren weist der Filtereinsatz 3 radial umlaufend angeordnete Filtersiebe 3a in seiner zylindrischen oder konischen Außenwand 3b auf.

Im montierten Zustand ist die Schraube 9 an dem der Öffnung des ersten Koppelungsanschlusses 5 entgegengesetzten Ende des Filtereinsatzes 3, also dem Filtereinsatzboden 3c, und koaxial zur Längsachse der Filtereinsatzausnehmung 7 angeordnet.

Der Filtereinsatz 3 weist weiter Rückflussbypassöffnungen 10 auf.

Die Rückflussbypassöffnungen 10 befinden sich im Filtereinsatzboden 3c des Filtereinsatzes 3.

Weiter ist im Inneren des Filtereinsatzes 3 ein Diaphragma 11 angeordnet.

Das Diaphragma 11 liegt im Inneren des Filtereinsatzes 3 auf dem Filtereinsatzboden 3c des Filtereinsatzes 3 auf und überdeckt die Rückflussbypassöffnungen 10 im Normalbetriebszustand.

Wie in Fig. 3 ersichtlich, ist im montierten Zustand das Diaphragma 11 im Filtereinsatz 3 befestigt und zwar ebenfalls mittels der Schraube 9.

Grundsätzlich ist jedoch anzumerken, dass die Befestigung von Filtereinsatz 3 und Diaphragma 11 mittels der Schraube 9 nur einem mögliche Ausführungsform ist und dass grundsätzlich auch andere Befestigungsarten denkbar sind.

Der zwischen Filtereinsatz 3 und dem Dichtelement 4 ausbildbare Ringspalt ist die Vorwärtsflussbypassöffnung 12 des Kupplungskopfs 1. Unterhalb der Dichtlippe 8 des Dichtelements 4 weitet sich der Ringspalt der Vorwärtsflussbypassöffnung 12 auf, da sich hier der Filtereinsatz 3 nicht bis an die Wandung der Filtereinsatzausnehmung 7 erstreckt.

Die Funktion des Kupplungskopfs 1 lässt sich wie folgt beschreiben:
Der erste Koppelungsanschluss 5 dient im gezeigten Ausführungsbeispiel zum Ankoppeln des Anhängers an das pneumatische Bremssystem oder Pneumatiksystem des Zugfahrzeugs.

Der zweite Koppelungsanschluss 6 ist mit dem pneumatischen Bremssystem oder Pneumatiksystem des Anhängers verbunden.

**Fig. 4** zeigt eine schematische Darstellung des Vorwärtsflussbetriebes des Kupplungskopfs 1 gem. Fig. 1.

Im Normalbetrieb strömt durch den ersten Koppelungsanschluss 5 Druckluft durch den Filtereinsatz 3, was in Fig. 4 durch den Pfeil mit dem Bezugszeichen FF1 (Druckluftstrom Forward Flow Normalbetrieb) gekennzeichnet ist.

Durch den Filtereinsatz werden im Druckluftstrom befindliche Partikel zurückgehalten und es wird verhindert, dass diese weiter in das pneumatische System des Anhängers gelangen.

Im Laufe der Betriebszeit setzt sich somit der Filtereinsatz immer weiter zu, bis irgendwann der Punkt erreicht ist, an dem der Filtereinsatz zugesetzt bzw. verstopft ist. Dies ist der Moment, in dem der Kupplungskopf ein vorgegebenes Maß von Verunreinigung der Filtereinheit erreicht hat und die Filtereinheit getauscht oder gereinigt werden soll.

Um eine Notfunktion (z.B. Weiterfahrt zur Werkstatt) zu ermöglichen, kann die Druckluft in diesem Not-Betriebsfall, auch Bypassbetriebszustand genannt, zwischen Dichtelement 4 und Filtereinsatz 3 durch die Vorwärtsflussbypassöffnung 12 hindurchströmen.

Dies ist in Fig. 4 durch den Pfeil mit dem Bezugszeichen FF2 (Druckluftstrom Forward Flow Bypassbetriebszustand) gekennzeichnet.

Sowohl bei einem Druckluftstrom Forward Flow Normalbetrieb als auch bei einem Druckluftstrom Forward Flow Bypassbetriebszustand wird das Diaphragma 11 dichtend durch den Druckluftstrom gegen den Filtereinsatzboden 3c gepresst, so dass in diesen Zuständen die Rückflussbypassöffnungen 10 dicht durch das Diaphragma 11 verschlossen sind.

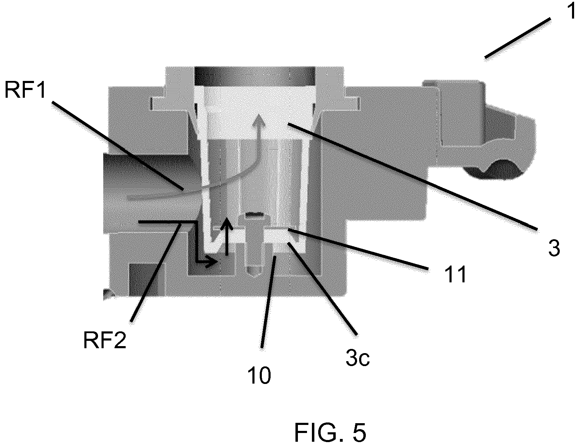

**Fig. 5** zeigt eine schematische Darstellung des Rückwärtsflussbetriebes des Kupplungskopfs 1 gem. Fig. 1.

Im normalen Rückflussbetrieb des Kupplungskopfs 1 wird der Druckluftstrom durch die Filtersiebe des Filtereinsatzes 3 geführt.

Dies ist in Fig. 5 durch den Pfeil mit dem Bezugszeichen RF1 (Druckluftstrom Return Flow Normalbetrieb) gekennzeichnet.

Im Not-Rückflussbetrieb des Kupplungskopfs 1, auch Rückflussbypasszustand genannt, wird der Druckluftstrom durch den Filtereinsatzboden 3c und die dort befindlichen Rückflussbypassöffnungen 10 des Filtereinsatzes 3 geführt.

Dadurch, dass in diesem Zustand die Druckluft von außen in das Innere des Filtereinsatzes 3 strömt, wird das Diaphragma 11 derart nach innen gedrückt, dass die Rückflussbypassöffnungen 10 freigegeben werden.

Dies ist in Fig. 5 durch den Pfeil mit dem Bezugszeichen RF2 (Druckluftstrom Return Flow Rückflussbypasszustand) gekennzeichnet.

### BEZUGSZEICHENLISTE

- 1: Kupplungskopf
- 2: Kupplungskopfgehäuse
- 3: Filtereinsatz
- 3a: Filtersieb
- 3b: Außenwand
- 3c: Filtereinsatzboden
- 4: Dichtelement
- 5: erster Koppelungsanschluss
- 6: zweiter Koppelungsanschluss
- 7: Filtereinsatzausnehmung
- 8: Dichtlippe
- 9: Schraube
- 10: Rückflussbypassöffnung
- 11: Diaphragma
- 12: Vorwärtsflussbypassöffnung

- K: Kupplungssystem

- FF1: Druckluftstrom Forward Flow Normalbetrieb
- FF2: Druckluftstrom Forward Flow Bypassbetriebszustand

- RF1: Druckluftstrom Return Flow Normalbetrieb
- RF2: Druckluftstrom Return Flow Rückflussbypasszustand

## Patentansprüche

1. Kupplungskopf (1) für ein Kupplungssystem (K), insbesondere für ein Kupplungssystem (K) zur pneumatischen Verbindung einer pneumatischen Bremsanlage eines Zugfahrzeugs und eines Anhängers, mit einem Kupplungskopfgehäuse (2), mit einem Filtereinsatz (3) und mit einem Dichtelement (4), wobei das Kupplungsgehäuse (2) wenigstens einen ersten Koppelungsanschluss (5) und wenigstens einen zweiten Koppelungsanschluss (6) aufweist, wobei der erste Koppelungsanschluss (5) eine Filtereinsatzausnehmung (7) ausbildet, in die der Filtereinsatz (3) eingesetzt ist und wobei das Dichtelement (4) im Normalbetriebszustand dichtend am Filtereinsatz (3) anliegt und im Bypassbetriebszustand einen Bypass zwischen Dichtelement (4) und Filtereinsatz (3) freigibt, **dadurch gekennzeichnet, dass** der Filtereinsatz (3) Rückflussbypassöffnungen (10) aufweist sowie ein im Inneren des Filtereinsatzes (3) angeordnetes Diaphragma (11), das die Rückflussbypassöffnungen (10) im Normalbetriebszustand dichtend verschließt und in einem Rückflussbypasszustand die Rückflussbypassöffnungen (10) freigibt.

2. Kupplungskopf (1) nach Anspruch 1,
**dadurch gekennzeichnet, dass**
das Dichtelement (4) eine radial umlaufende Dichtlippe (8) aufweist.

3. Kupplungskopf (1) nach Anspruch 2,
**dadurch gekennzeichnet, dass**
die Dichtlippe (8) im montierten Zustand gegen die Außenseite des Filtereinsatzes (3) angestellt ist.

4. Kupplungskopf (1) nach Anspruch 2 oder Anspruch 3,
**dadurch gekennzeichnet, dass**
die Dichtlippe (8) in Richtung Gehäuseinneres des Kupplungskopfgehäuses (2) orientiert ist.

5. Kupplungskopf (1) nach einem der vorhergehenden Ansprüche,
**dadurch gekennzeichnet, dass**
der Filtereinsatz (3) gesondert im Kupplungskopfgehäuse (2) befestigt ist.

6. Kupplungskopf (1) nach Anspruch 5,
**dadurch gekennzeichnet, dass**
der Filtereinsatz (3) mittels eines Befestigungsmittels, insbesondere einer Schraube (9), befestigt ist.

7. Kupplungskopf (1) nach Anspruch 6,
**dadurch gekennzeichnet, dass**
im montierten Zustand das Befestigungsmittel an dem der Öffnung des ersten Koppelungsanschlusses (5) entgegengesetzten Ende des Filtereinsatzes (3) angeordnet ist.

8. Kupplungskopf (1) nach Anspruch 7,
**dadurch gekennzeichnet, dass**
das Befestigungsmittel im montierten Zustand koaxial zur Längsachse der Filtereinsatzausnehmung (7) angeordnet ist.

9. Kupplungskopf (1) nach einem der Ansprüche 6 bis 8,
**dadurch gekennzeichnet, dass**
im montierten Zustand das Befestigungsmittel das Diaphragma (11) im Filtereinsatz (3) befestigt.

## Claims

1. Coupling head (1) for a coupling system (K), in particular for a coupling system (K) for the pneumatic connection of a pneumatic brake system of a tractor vehicle and a trailer, with a coupling head housing (2), with a filter insert (3) and with a sealing element (4), the coupling housing (2) having at least one first coupling connector (5) and at least one second coupling connector (6), the first coupling connector (5) configuring a filter insert recess (7), into which the filter insert (3) is inserted, and the sealing element (4) bearing sealingly against the filter insert (3) in the normal operating state and releasing a bypass between the sealing element (4) and the filter insert (3) in the bypass operating state, **characterized in that** the filter insert (3) has return flow bypass openings (10) and a diaphragm (11) which is arranged in the interior of the filter insert (3) and closes the return flow bypass openings (10) sealingly in the normal operating state and releases the return flow bypass openings (10) in a return flow bypass state.

2. Coupling head (1) according to Claim 1,
**characterized in that**
the sealing element (4) has a radially peripheral sealing lip (8).

3. Coupling head (1) according to Claim 2,
**characterized in that**
the sealing lip (8) is set against the outer side of the filter insert (3) in the mounted state.

4. Coupling head (1) according to Claim 2 or Claim 3,
**characterized in that**
the sealing lip (8) is oriented in the direction of the housing interior of the coupling head housing (2).

5. Coupling head (1) according to one of the preceding claims,
**characterized in that**
the filter insert (3) is fastened separately in the coupling head housing (2).

6. Coupling head (1) according to Claim 5,
**characterized in that**
the filter insert (3) is fastened by means of a fastening means, in particular a screw (9).

7. Coupling head (1) according to Claim 6,
**characterized in that**,
in the mounted state, the fastening means is arranged at that end of the filter insert (3) which is opposite the opening of the first coupling connector (5).

8. Coupling head (1) according to Claim 7,
**characterized in that**,
in the mounted state, the fastening means is arranged coaxially with respect to the longitudinal axis of the filter insert recess (7).

9. Coupling head (1) according to one of Claims 6 to 8,
**characterized in that**,
in the mounted state, the fastening means fastens the diaphragm (11) in the filter insert (3).

## Revendications

1. Tête (1) de raccordement d'un système (K) de raccordement, notamment d'un système (K) de raccordement pour la liaison d'un système pneumatique de freinage d'un véhicule tracteur et d'une remorque, comprenant un corps (2) de tête de raccordement, comprenant un insert (3) de filtre et comprenant un élément (4) d'étanchéité, dans laquelle le corps (2) a au moins un premier raccord (5) de raccordement et au moins un deuxième raccord (6) de raccordement, dans laquelle le premier raccord (5) de raccordement constitue un évidement (7) d'insert de filtre, dans lequel l'insert (3) de filtre est inséré, et dans lequel l'élément (4) d'étanchéité s'applique, dans l'état de fonctionnement normal, d'une manière étanche à l'insert (3) de filtre et dégage, dans l'état de fonctionnement en dérivation, une dérivation entre l'élément (4) d'étanchéité et l'insert (3) de filtre, **caractérisée en ce que** l'insert (3) de filtre a des ouvertures (10) de dérivation de reflux, ainsi qu'un diaphragme (11), qui est disposé à l'intérieur de l'insert (3) de filtre, qui ferme de manière étanche les ouvertures (10) de dérivation de reflux dans l'état de fonctionnement normal et qui dégage les ouvertures (10) de dérivation de reflux dans un état de dérivation de reflux.

2. Tête (1) de raccordement suivant la revendication 1,
**caractérisée en ce que**
l'élément (4) d'étanchéité a une lèvre (8) d'étanchéité faisant le tour radialement.

3. Tête (1) de raccordement suivant la revendication 2,
**caractérisée en ce que**
la lèvre (8) d'étanchéité est mise, à l'état monté, sur le côté extérieur de l'insert (3) de filtre.

4. Tête (1) de raccordement suivant la revendication 2 ou revendication 3,
**caractérisée en ce que**
la lèvre (8) d'étanchéité est orientée en direction de l'intérieur du corps (2) de la tête de raccordement.

5. Tête (1) de raccordement suivant l'une des revendications précédentes,
**caractérisée en ce que**
l'insert (3) de filtre est fixé d'une manière distincte dans le corps (2) de la tête de raccordement.

6. Tête (1) de raccordement suivant la revendication 5,
**caractérisée en ce que**
l'insert (3) de filtre est fixé au moyen d'un moyen de fixation, notamment d'une vis (9).

7. Tête (1) de raccordement suivant la revendication 6,
**caractérisée en ce qu'**
à l'état monté, le moyen de fixation est disposé à l'extrémité, opposée à l'ouverture du premier raccord (5) de raccordement, de l'insert (3) de filtre.

8. Tête (1) de raccordement suivant la revendication 7,
**caractérisée en ce que**
le moyen de fixation est disposé, à l'état monté, coaxialement à l'axe longitudinal de l'évidement (7) d'insert de filtre.

9. Tête (1) de raccordement suivant l'une des revendications 6 à 8,
**caractérisée en ce qu'**
à l'état monté, le moyen de fixation fixe le diaphragme (11) dans l'insert (3) de filtre.
